# EUROPEAN PATENT SPECIFICATION

(11) **EP 1 132 012 B1**
(45) Date of publication and mention of the grant of the patent: **02.01.2003**
(21) Application number: 00830166.5
(22) Date of filing: 03.03.2000
(51) Int. Cl.: A23L 3/32

(54) **A method for sanitizing food products**
Verfahren zur Desinfektion von Nahrungsmitteln
Procédé pour la désinfection de produits alimentaires

(43) Date of publication of application: 12.09.2001
(73) Proprietor: BARILLA ALIMENTARE S.P.A., 43100 Parma (IT)
(72) Inventor: Caselli, Oreste, 42021 Bibbiano (Reggio Emilia) (IT)
(74) Representative: Botti, Mario

(56) References cited:
- EP-A- 0 968 661
- WO-A-00/15054
- DE-A- 4 432 228
- GB-A- 1 103 597
- GB-A- 1 237 693
- US-A- 4 524 079
- US-A- 5 069 920
- US-A- 5 326 530
- US-A- 5 925 324
- PATENT ABSTRACTS OF JAPAN vol. 013, no. 079 (C-571), 22 February 1989 (1989-02-22) & JP 63 269972 A (DOWA:KK), 8 November 1988 (1988-11-08)
- PATENT ABSTRACTS OF JAPAN vol. 009, no. 317 (C-319), 12 December 1985 (1985-12-12) & JP 60 153784 A (YAMAKITA FOODS KK), 13 August 1985 (1985-08-13)

## Description

### Field of the Invention

This invention relates to a method of sanitizing generic food products in order to extend their shelf-life.

Expressions like "food article sanitation" are used, throughout this description and the following claims, to designate any treatments directed to substantially rid food products of bacteria, pathogenic micro-organisms, spores, molds, yeasts and any other contents that may lead to quick decay thereof under both the sanitary and the organoleptic standpoint.

Among the most widely applied treatments for the purpose, pasteurization and sterilization processes are best known which may include, among others, exposure to steam, infrared radiation, UV radiation or microwave, acidification at controlled pH values, addition of appropriate preservatives, moisture control and water activity (Aw) control, or combinations thereof.

While their effectiveness is well recognized, all of the above processes are confronted with a problem at the packaging stage of the treated products. Where the products are sanitized in their packaged condition, as may be done with certain products using microwaves or the like radiation, or in other cases by the application of boiling liquids or saturated steam, one material may react differently dependently on the kind of packages. In fact, the packaging material may unexpectedly collapse or become scorched, and/or may interfere (expectedly or unexpectedly) with a uniformly applied treatment. Wherever the packaging operation comes next to the sanitation process, care must be exerted to prevent subsequent handling of the processed products, and/or the internal package "medium", from thwarting the effects of the sanitation process. Hence the need to have the packaging carried out in sterile rooms, using thoroughly sterilized equipment and arranging for the packaging operators to work in sterile conditions. In addition, or in other cases, the packaging is to provide a modified atmosphere to the package interior, such as through the use of nitrogen, CO₂, or other suitable and approved gases.

All this reflects in increased production costs, and hence higher retail prices.

### Prior Art

PCT WO 95/18768 describes a process for sanitizing/purifying water and other liquids, such as fruit juice, milk and the like "pumpable" food products, which is based on pulsive electric arcing between electrodes which are dipped in the stream of liquid to be sanitized. The power supplied for arc formation is adequate to generate UV radiation and "mechanical shocks" which are highly effective to kill germs, bacteria, and eliminate whatever else is expected to be removed from the stream being sanitized. However, besides being limited to the use with liquid or pumpable products, the above mentioned treatment is ultimately to face the packaging problem, and hence the aforementioned remedies which are expensive and difficult to implement.

The treatment taught in PCT WO95/18768 cannot be applied to the sanitation of "solid" food products, such as bakery products, and/or prepackaged products, because the electric arc would immediately destroy the packaging material and burn the article thereunder.

A food article sanitation method was recently tried which is based on the use of air ions created in an electric field between two facing electrodes, the electrodes being supplied a DC voltage and having a stream of the product to be sanitized flowed continuously through the gap therebetween, which stream is generally enriched by the airflow needed to provide said ions.

This prior method is affected by the same limitations and drawbacks as that of the aforementioned international patent. In fact, it can only be used with liquid or pumpable products, is confronted with the same post-treatment packaging problems, and cannot be applied to prepackaged products since the latter, in moving past the electrodes, would cause electric arcing to occur and the package become destroyed.

A prior art solution is disclosed in the US patent No. 5,326,530 that relates to a method for killing noxious biological organisms (bacteria, insects, etc.) in contaminated materials such as liquid, semi-liquid or solid foods. The materials treated by this method are not packaged food.

The method disclosed in this document provides for the application of an optimized electric field exhibiting controlled current densities, rather than uniform electric fields.

A further prior art solution is disclosed in the GB patent 1 103 597 relating to a method for controlling microorganism in food products.

This document discloses to expose a packaged product to a field of alternating electromagnetic wave energy to attenuate the microorganism and sterilize the product. However, no provisions are taken to avoid formation of an electric arc between the generator of the electromagnetic field and the packaged product. The problem underlying this invention is to provide a method for sanitizing food products in their packaged condition, which method can overcome all of the aforementioned drawbacks affecting the prior art and exhibits enhanced effectiveness, as well as being applicable to any food products regardless of these being liquid and/or pumpable in nature.

### Summary of the Invention

This problem is solved according to the invention by a method of sanitizing packaged food products by air ions, characterized in that it comprises the steps of:
generating an electric field between two electrodes by supplying a periodic voltage to the electrodes;
controlling said electric field between a minimum value, sufficient to generate the air ions, and a maximum value which is below that needed to strike an electric arc;
holding the packaged food products to be sanitized within said field for a predetermined time period.

The invention also provides an apparatus for implementing the above method. This apparatus has the features of Claims 8 foll., and is characterized in that said capacitor is supplied a periodic voltage to generate a variable electric field between its plates, the strength of said electric field being controlled between a minimum value for producing air ions and a maximum value below the value that would strike an electric arc.

The features and advantages of the method and apparatus according to the invention will be apparent from the following detailed description thereof, to be read in conjunction with the accompanying drawings given by way of example.

In the drawings:

### Brief Description of the Drawings

Figure 1 shows schematically an ionization apparatus according to the prior art.

Figure 2 shows schematically an apparatus according to the invention for sanitizing packaged food products.

### Detailed Description

With reference to the drawing views, an apparatus according to this invention for sanitizing packaged food products, particularly bakery products, is shown generally at 1 in schematic form.

The term "bakery products" is used here to broadly designate food products which are produced on an industrial scale by a baking process and packaged directly as they leave the baking oven, e.g. bread, sliced bread, pies, tarts, etc.. (this description makes reference to this specific application for illustration purposes only).

The invention provides for the bakery products to be held in a variable electric field effective to ionize the air inside the package, but without allowing arcing to occur.

More particularly, the packaged food products are held within the electric field generated between two electrodes which are supplied a periodic voltage. The strength of this electric field is controlled between a minimum value for producing air ions and a maximum value which is smaller than the value that would strike an electric arc.

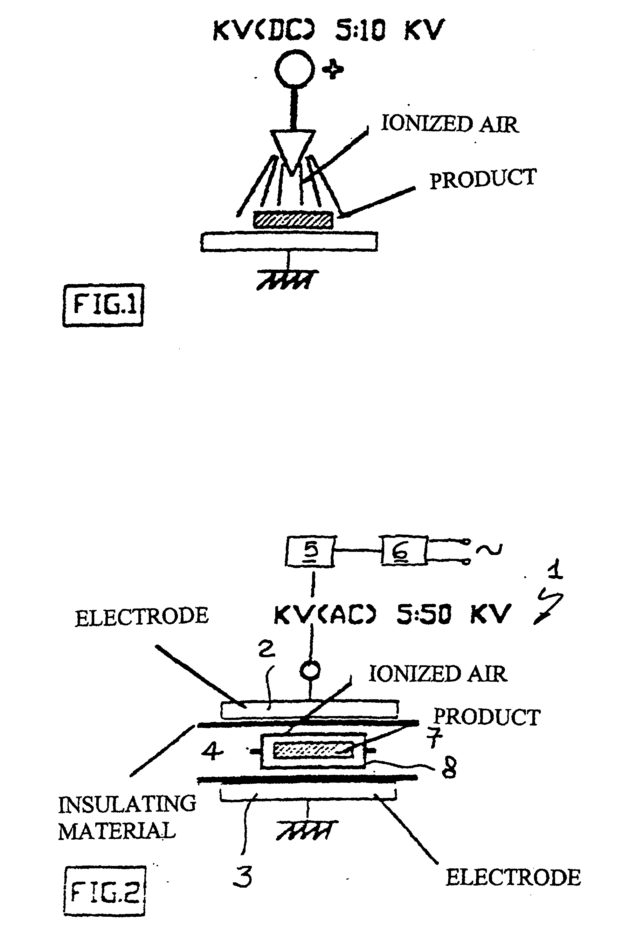

The apparatus 1 on which this method can be implemented is shown schematically in Figure 2 and includes basically a pair of plate-like electrodes 2, 3 facing each other. These electrodes may be a pair of parallel facing plates of a plate capacitor. Preferably, the plates are arranged to lie one above the other in a horizontal plane.

The dielectric 4 of this capacitor is essentially air, or a suitable inert gas.

Advantageously in this invention, the apparatus 1 includes an electric power circuit 5 arranged to apply a periodic voltage to the plates 2, 3.

The circuit 5 takes this voltage from a voltage or AC generator 6 which includes a plurality of controls, in the forms of manually operated controls and knobs, for adjusting the voltage value, e.g. between 10 and 50 kV, voltage frequency, e.g. between 50Hz and 200 Hz, as well as the voltage waveform, which may be sinusoidal, triangular, square, rectangular, sawtooth or the like, etc.

Advantageously in this invention, at least one inward surface of the facing plates is covered with at least one layer of an insulating material having high dielectric properties. In essence, the inward surface of one, preferably both, plates 2, 3 would be covered with this dielectric material layer.

For the purpose, any insulating material having high dielectric properties, such as mica, ceramic materials such as caolin, or sheets of synthetic resins selected from styrene, polyester and polycarbonate resins, may be used.

However, among the ceramic materials, caolin is preferred, while among the synthetic resin materials which are suitable for use as the electrode coating, sheets of polyethyleneterephtalate, available commercially under the Mylar trade name, are to be preferred.

Basically, this insulative layer is effective to enhance the value of the dielectric between the capacitor plates, so as to prevent the occurrence of arcing.

A conveyor belt, not shown because conventional, is interposed between the plates 2, 3 and is run by drive rollers along a parallel direction to the plates, close to the lower plate 3.

This conveyer belt is made of an insulating plastics material, e.g. sheet Mylar, and can, therefore, substitute the insulating layer covering the lower plate 3.

Food products 7 to be sanitized are packaged in a film 8 of a usually transparent plastics material for food applications, and are laid onto the conveyor belt.

As the products 7 are moved between the plates 2, 3, the plates are supplied the periodic voltage that results in a variable electric field being produced effective to ionize the air inside the package without causing arcing to occur.

The rate of advance of the conveyer belt is adjusted to hold the packages of food products to be sanitized within the electric field for a predetermined time period which may vary between 10 and 120 seconds per package, for example.

The invention is based on the principle that, when a periodic voltage is applied across the facing plates 2, 3 of the capacitor, the intervening dielectric 4 becomes subjected to a variable electric field and a current is induced to flow through it by the polarized air molecules.

Tests carried out by the Applicant have unexpectedly shown that, when an appropriate high-frequency periodic voltage is applied to the facing plates of the capacitor, with the packaged food product 7 therebetween, a variable electric field is generated which induces ionization of the air inside the package.

The extent of this ionization basically depends on the value of the variable electric field, itself a function of both the applied voltage level and the frequency of the periodic voltage.

In a preferred embodiment, the periodic voltage applied across the capacitor plates is selected to lie in the 5 to 50 kV range, and the frequency of this voltage is selected in the 30 to 50x10⁶ Hz range.

Preferably, the periodic voltage is an AC voltage of sinusoidal waveform.

The method of this invention has been applied to a range of packaged food products yielding good results.

For example, bakery products such as bread, pies, and tarts have been processed with the inventive method after packaging in plastics film for food applications, such as polyethylene or polypropylene films.

The bakery products exit the baking oven in a substantially sterile condition, and in order to verify the effectiveness of the method according to the invention, tests were carried out by the Applicant which consisted of inoculating some food products with yeasts and/or fungi apt to affect their preservability. For example, different osmophilic yeasts and/or xerophilic molds were inoculated which had a microbiological content of 10⁶ colony-forming units.

These products were then subjected to sanitation with the method of this invention.

It was found that by placing the inoculated bakery product in its packaged state between the capacitor plates, this content of micro-organisms could be reduced by 10⁴ times. In particular, these results were obtained by applying across the plates a periodic voltage selected in the range of 20 to 40 kV at a frequency of 50 to 200 Hz, for a 10- to 60-second duration time.

As for the effectiveness of the method on spores as molds and the like, it was found that products so sanitized underwent organoleptic alteration significantly later, even one week later, than untreated products.

To enhance the effectiveness of the method, it may be beneficial if the food products to be sanitized are packaged under a readily ionizable modified atmosphere.

It can be appreciated from the foregoing that the method of this invention will ensure sanitation of a large variety of packaged food products, by selecting suitable values for the periodic voltage and the frequency to be applied across the capacitor for a sufficient time to provide the desired degree of sanitation.

A major advantage of the method according to this invention is that the sanitation process does not affect the organoleptic properties of the products, so that the latter will lose nothing of their taste and flavor.

In addition, the method of this invention can be applied at a low rate of power consumption, significantly below that of other sterilization processes, such as pasteurization. And this method can be applied where other sanitation methods cannot lest the products undergo immediate deterioration of their organoleptic characteristics.

In this respect, similar results to those obtained with bakery products can be obtained with streams of water, or other liquids such as fruit juice, milk, and similar food products.

## Claims

1. A method of sanitizing packaged food products by means of air ions to extend their shelf life and preservability at retail outlets, comprising the steps of:
generating an electric field between two electrodes by supplying a periodic voltage to the electrodes;
controlling said electric field between a minimum value, sufficient to generate the air ions, and a maximum value which is below that needed to strike an electric arc;
holding the packaged food products to be sanitized within said field for a predetermined time period, **characterized in that** said electric field is formed between a pair of plate-like electrodes facing each other, and that at least one of said electrodes is coated with an insulating material while an air gap remains between the electrodes and the packaged food products.

2. A method according to Claim 1, **characterized in that** said electric field is variable in strength.

3. A method according to Claim 1, **characterized in that** said electric field is variable in frequency.

4. A method according to Claim 1, **characterized in that** said periodic voltage is an alternating voltage of sinusoidal waveform.

5. A method according to Claim 1, **characterized in that** said insulating material is a sheet of a synthetic resin selected from styrene, polyester, polyethyleneteraphtalate, and polycarbonate resins.

6. An apparatus for sanitizing packaged food products (7) by means of air ions, of the type which comprises a pair of plate-like electrodes (2,3) facing each other and forming respective parallel plates of a capacitor; an electric circuit (5) interconnecting the capacitor and a voltage or current generator (6); and a conveyer belt extending between said plates to carry said food products (7) through the capacitor; **characterized in that** said capacitor is connected to an electric power circuit. (5) to be supplied with a periodic voltage to generate a variable electric field between its plates, the strength of said electric field being controlled between a minimum value for producing air ions and a maximum value below the value that would strike an electric arc, and that at least one of said electrodes (2,3) is coated with a layer or film of an insulating material while an air gap remains between the electrodes and the packaged food products.

7. An apparatus according to Claim 6, **characterized in that** said generator (6) of an alternating voltage or current is provided with multiple controls for respectively adjusting the voltage value, voltage frequency, and voltage waveform.

8. An apparatus according to Claim 6, **characterized in that** said conveyer belt is the insulating layer covering the lower electrode (3).

9. An apparatus according to Claim 6, **characterized in that** said electric power circuit 5 is supplied by a voltage or AC generator (6) adjusting the voltage value between 10 and 50 kV and voltage frequency between 50Hz and 200 Hz.

## Patentansprüche

1. Verfahren zum Sterilisieren von verpackten Nahrungsmittelprodukten mittels Luftionen, um ihre Lagerfähigkeit und Haltbarkeit beim Einzelhändler zu verlängern, umfassend die folgenden Schritte:
Erzeugen eines elektrischen Felds zwischen zwei Elektroden durch Anlegen einer periodischen Spannung an die Elektroden;
Regeln des elektrischen Felds zwischen einem minimalen Wert, der ausreicht, um die Luftionen zu erzeugen, und einem maximalen Wert, der unter dem liegt, der benötigt wird, um einen elektrischen Bogen zu zünden;
Halten der verpackten, zu sterilisierenden Nahrungsmittelprodukte in dem Feld für eine vorbestimmte Zeitdauer, **dadurch gekennzeichnet, dass** das elektrische Feld zwischen einem Paar plattenförmiger, einander zugewandter Elektroden gebildet wird und dass mindestens eine der Elektroden mit einem isolierenden Material umhüllt ist, während zwischen den Elektroden und den verpackten Nahrungsmittelprodukten ein Luftspalt bleibt.

2. Verfahren nach Anspruch 1, **dadurch gekennzeichnet, dass** die Stärke des elektrischen Felds variabel ist.

3. Verfahren nach Anspruch 1, **dadurch gekennzeichnet, dass** die Frequenz des elektrischen Felds variabel ist.

4. Verfahren nach Anspruch 1, **dadurch gekennzeichnet, dass** die periodische Spannung eine Wechselspannung mit Sinuswellenform ist.

5. Verfahren nach Anspruch 1, **dadurch gekennzeichnet, dass** das isolierende Material eine Folie aus einem synthetischen Harz ist, das aus Styrol-, Polyester-, Polyethylenteraphthalat- und Polycarbonatharzen ausgewählt ist.

6. Vorrichtung zum Sterilisieren von verpackten Nahrungsmittelprodukten (7) mittels Luftionen, der Bauart, die ein Paar plattenförmiger Elektroden (2,3), die einander gegenüberliegen und entsprechende parallele Platten eines .Kondensators bilden; einen elektrischer Stromkreis (5), der den Kondensator und einen Spannungs- oder Stromgenerator (6) verbindet; und ein Förderband umfasst, das sich zwischen den Platten erstreckt, um die Nahrungsmittelprodukte (7) durch den Kondensator zu transportieren; **dadurch gekennzeichnet, dass** der Kondensator mit einem elektrischen Starkstromkreis (5) verbunden ist, an den eine periodische Spannung anzulegen ist, um ein variables elektrisches Feld zwischen seinen Platten zu erzeugen, wobei die Stärke des elektrischen Felds zwischen einem minimalen Wert zum Erzeugen von Luftionen und einem maximalen Wert geregelt wird, der unter dem Wert liegt, der einen elektrischen Bogen zünden würde, und dass mindestens eine der Elektroden (2,3) mit einer Schicht oder einem Film eines isolierenden Materials umhüllt ist, während ein Luftspalt zwischen den Elektroden und den verpackten Nahrungsmittelprodukten bleibt.

7. Vorrichtung nach Anspruch 6, **dadurch gekennzeichnet, dass** der Wechselspannungs- oder Wechselstrom-Generator (6) mit mehreren Regelungen zum jeweiligen Einstellen des Spannungswerts, der Spannungsfrequenz und der Spannungswellenform ausgestattet ist.

8. Vorrichtung nach Anspruch 6, **dadurch gekennzeichnet, dass** das Förderband die Isolierschicht ist, die die untere Elektrode (3) bedeckt.

9. Vorrichtung nach Anspruch 6, **dadurch gekennzeichnet, dass** der elektrische Kraftstromkreis (5) von einem Spannungs- oder Wechselstromgenerator (6) geliefert wird, der den Spannungswert zwischen 10 und 50 kV und die Spannungsfrequenz zwischen 50 Hz und 200 Hz einstellt.

## Revendications

1. Un procédé de désinfection de produits alimentaires emballés au moyen d'ions de l'air pour accroître leur durée de stockage et leur faculté de conservation sur les lieux de vente, comprenant les étapes de :
production d'un champ électrique entre deux électrodes par délivrance d'une tension périodique aux électrodes ;
commande dudit champ électrique entre une valeur minimale, suffisante pour produire les ions de l'air, et une valeur maximale qui est au-dessous de celle nécessaire à l'amorçage d'un arc éiectrique ;
maintien des produits alimentaires emballés à désinfecter au sein dudit champ pendant une période prédéterminée, **caractérisé en ce que** ledit champ électrique est formé entre une paire d'électrodes en vis-à-vis semblables à des plaques, et **en ce qu'**au moins l'une desdites électrodes est revêtue d'un matériau isolant tandis qu'un intervalle d'air subsiste entre les électrodes et les produits alimentaires emballés.

2. Un procédé selon la revendication 1, **caractérisé en ce que** ledit champ électrique est de force variable.

3. Un procédé selon la revendication 1, **caractérisé en ce que** ledit champ électrique est de fréquence variable.

4. Un procédé selon la revendication 1, **caractérisé en ce que** ladite tension périodique est une tension alternative de forme d'onde sinusoïdale.

5. Un procédé selon la revendication 1, **caractérisé en ce que** ledit matériau isolant est une feuille d'une résine synthétique choisie parmi les résines de styrène, de polyester, de polyéthylène téréphtalate et de polycarbonate.

6. Un dispositif pour désinfecter des produits alimentaires emballés (7) au moyen d'ions de l'air, du type comprenant une paire d'électrodes semblables à des plaques (2, 3) en vis-à-vis et formant des armatures parallèles respectives d'un condensateur ; un circuit électrique (5) interconnectant le condensateur et un générateur de tension ou de courant (6) ; et un tapis roulant s'étendant entre lesdites armatures pour transporter lesdits produits alimentaires (7) au travers du condensateur ; **caractérisé en ce que** ledit condensateur est relié à un circuit électrique de puissance (5) à alimenter par une tension périodique pour produire un champ électrique variable entre ses armatures, la force dudit champ électrique étant commandée entre une valeur minimale pour produire les ions de l'air et une valeur maximale au-dessous de la valeur qui amorcerait un arc électrique, et **en ce qu'**au moins l'une desdites électrodes (2, 3) est revêtue d'une couche ou film d'un matériau isolant tandis qu'un intervalle d'air subsiste entre les électrodes et les produits alimentaires emballés.

7. Un dispositif selon la revendication 6, **caractérisé en ce que** ledit générateur (6) d'une tension ou d'un courant alternatif est pourvu de commandes multiples pour ajuster respectivement la valeur de tension, la fréquence de la tension et la forme d'onde de la tension.

8. Un dispositif selon la revendication 6, **caractérisé en ce que** ledit tapis roulant est la couche isolante recouvrant l'électrode inférieure (3).

9. Un dispositif selon la revendication 6, **caractérisé en ce que** ledit circuit électrique de puissance (5) est alimenté par une tension ou un générateur en courant alternatif (6) ajustant la valeur de tension entre 10 et 50 kV et la fréquence de la tension entre 50 Hz et 200 Hz.
